# FASCICULE DE BREVET EUROPEEN

(11) **EP 0 850 713 B1**
(45) Date de publication et mention de la délivrance du brevet: **02.05.2001**
(21) Numéro de dépôt: 97403079.3
(22) Date de dépôt: 18.12.1997
(51) Int. Cl.: B23B 5/24, F02K 1/82

(54) **Dispositif et procédé pour la protection thermique et mécanique d'une surface**
Methode und Einrichtung zum thermischen und mechanischen Schutz einer Oberfläche
Method and device for the thermal and mechanical protection of a surface

(30) Priorité: 26.12.1996 FR 9616047
(43) Date de publication de la demande: 01.07.1998
(73) Titulaire: AEROSPATIALE MATRA, 75016 Paris (FR)
(72) Inventeur: Fages, Jacques, 93170 Bagnolet (FR)
(74) Mandataire: Rinuy, Santarelli

(56) Documents cités:
- EP-A- 0 398 787
- EP-A- 0 672 630
- DE-A- 4 016 052
- DE-C- 3 638 658

## Description

La présente invention concerne un dispositif de protection thermique selon le préambule de la revendication 1 et comme connu du document EP-A-0 398 787.

Plus particulièrement, l'invention concerne un dispositif de protection thermique et un procédé de fabrication de celui-ci, destiné à la protection de surfaces structurelles soumises à un écoulement érosif de gaz (corrosifs ou non) à grande vitesse et haute température et à des vibrations de niveau élevé, en particulier inhérentes au fonctionnement.

Il faut comprendre que cet écoulement à grande vitesse est relatif en ce sens qu'il peut s'agir d'un déplacement d'un véhicule dans une atmosphère gazeuse, ou au contraire d'un écoulement gazeux à grande vitesse par rapport à une structure fixe, par exemple au sein de tuyères de propulsion.

Pour protéger une surface vis-à-vis d'un tel écoulement, on a couramment recours à une protection thermique ablative (ou ablatable), c'est-à-dire à un revêtement qui protège la surface tout en se consommant. Ce type de protection ne s'applique bien sûr que dans le cas de sollicitations de courte durée (en pratique, quelques centaines de secondes au maximum).

Le plus souvent, les couches de protection thermique des structures à protéger vis-à-vis d'un écoulement érosif sont constituées de composites à liants organiques, organo-métalliques ou minéraux capables d'inclure des renforts du type poudres, fibres, tissus organiques ou minéraux. Sous l'action des gaz chauds, le matériau ablatable subit le phénomène de pyrolyse. Cette pyrolyse s'accompagne d'une dégradation de la chaîne carbonée ou organo-silicique du liant qui rend la scorie fragile et cassante dans la masse. Pour pallier cette fragilisation, la couche de protection thermique est couramment armée, suivant des techniques diverses.

Il est en effet connu que, pour un matériau ablatable de ce type, soumis à l'érosion des gaz chauds et aux vibrations, l'ablation est réduite si le matériau est armé. L'armature noyée dans le matériau isolant peut être métallique ou non, tissée ou fibreuse. L'ablation est d'autant plus faible que le renfort fibreux ou tissé est ancré et orienté dans la matrice perpendiculairement au sens des gaz tandis que le transfert thermique est d'autant plus faible que le renfort est orienté dans le sens des gaz. Il apparaît en effet que les renforts fibreux ou tissés se révèlent moins isolants thermiquement que la matrice isolante.

Deux grands types de procédé sont connus pour réaliser des matériaux de protection thermique :
- un premier type de procédé fait intervenir une compression sous très haute pression (typiquement plusieurs centaines de bars) d'une masse de fibres de renfort pré-imprégnés de résine ; il s'agit d'une sorte de moulage avec injection de cette masse de fibres pré-imprégnées entre deux demi coquilles ;
- un deuxième type de procédé fait intervenir un bobinage d'une fibre imprégnée d'une résine, de préférence au cours même de l'opération de bobinage.

Le procédé par bobinage présente l'avantage de ne pas nécessiter des pressions aussi élevées que celles requises par le procédé par compression ; le procédé par bobinage peut comporter une étape sous pression, mais la pression en question est typiquement de l'ordre au plus de dix bars environ.

Des exemples de dispositif de protection thermique sont donnés par les documents EP-0.174.886, EP-0.398.787, FR-2.652.036, EP - 0.471.605, ou EP-0.501.861, correspondant à des inventions réalisées chez la Demanderesse.

Le document EP-0.174.886 concerne ainsi une protection thermique comportant une couche de résine polymérisée isolante fixée à la surface de la paroi à protéger ; dans cette couche est prévue une armature comportant un maillage frangé avec une partie maillée soumise à l'écoulement érosif et des franges dirigées, avec une inclinaison prédéterminée, vers la surface à protéger. De façon très générale, ce document concerne la protection de structures creuses à section évolutive monotone.

Le document EP-0.398.787 propose une solution améliorée, en ce sens qu'il enseigne une protection thermique comportant, comme dans la solution précédente, une armature réfractaire formée d'un matelas frangé avec une partie maillée soumise à l'écoulement érosif et des franges destinées à être dirigées vers la paroi de structure à protéger, cette armature étant noyée dans une matrice thermiquement isolante. De plus, cette protection thermique comporte un tissu réfractaire à grandes mailles, disposé parallèlement à la partie maillée de l'armature, et traversé, à la faveur de ces grandes mailles, par lesdites franges. Il est fait état d'une couche de protection, avantageusement réfractaire, disposée en regard des extrémités des franges, couche qui est en pratique constituée par un fil ou ruban bobiné en sorte de fretter le tissu réfractaire. Cette couche est avantageusement supprimée après cuisson, lors de l'usinage final de la protection thermique, de sorte que, en pratique, elle ne subsiste pas lors de l'usage de la protection thermique.

Le document FR-2.652.036 propose un revêtement de protection thermique de structure différente en ce sens qu'il comporte une couche principale formée d'une succession de tranches de renfort fibreux réfractaire sensiblement parallèles les unes aux autres mais inclinées par rapport à la surface à protéger, entre lesquelles sont intercalées des tranches isolantes, cette couche principale étant doublée d'au moins une sous-couche 4 longeant la surface à protéger et essentiellement constituée d'une matière isolante compatible avec celle des tranches isolantes. Le renfort fibreux réfractaire est en pratique constitué d'un ruban. La sous-couche est par exemple formée de la même matière isolante que celle qui constitue les tranches isolantes. Cette sous-couche sert principalement à ancrer le renfort fibreux réfractaire, puisque celui-ci est, lors de la fabrication du revêtement de protection thermique, engagé au fond de sillons tracés dans cette sous-couche. Cette dernière peut aussi servir à d'autres fonctions telles que la protection contre les rayons X, ou une super isolation par matériau alvéolaire.

Un troisième type de protection thermique est proposé dans le document EP-0.471.605. Cette protection thermique est obtenue par bobinage, sur plusieurs couches superposées, de fils réfractaires à bouclettes, autour d'un mandrin temporairement muni de picots radiaux d'armement et de renforcement, également en matériau réfractaire, destinés à faire partie intégrante de la protection thermique une fois finie.

Enfin le document EP-0.501.861 propose une protection thermique de type tridimensionnel comme dans le cas du document précédent, formée d'un empilement de tissus imprégnés, traversés par des fibres de matériau réfractaire.

Ces diverses solutions ont permis des progrès certains. Le besoin s'est toutefois fait sentir de disposer de protections thermiques à liant organique non ablatives, résistant à la fois à un écoulement érosif de gaz à grande vitesse et à des agressions thermiques importantes, soit plus longtemps, soit pendant les mêmes durées, pour des pièces dont la géométrie doit rester invariable.

L'invention a pour objet de répondre à ce besoin.

L'invention propose à cet effet un dispositif de protection thermique destiné à longer une surface à protéger vis-à-vis d'un environnement extérieur thermiquement et mécaniquement sévère, ayant une face interne destinée à être en regard de la surface à protéger et une face externe destinée à être soumise à l'environnement extérieur, comportant une couche composite contenant une armature noyée dans une matrice en matière organique thermiquement isolante, ce dispositif étant caractérisé en ce qu'il comporte en outre une couche externe en matière céramique, métallique ou semi-métallique, dont fait partie ladite face externe et qui est solidaire de la couche composite.

Ainsi, selon l'invention, la couche externe peut être en matière céramique (par exemple alumine, bioxyde de titane éventuellement combiné à de l'alumine, zircone, zircon (ZrO₂ + SiO₂), spinelle (MgO, Al₂O₃), etc... seuls ou combinés), ou en matière métallique (notamment molybdène, tungstène, titane, etc... seuls ou combinés), et/ou en matière semi-métallique (notamment carbone de titane, carbure de tungstène, etc... seuls ou combinés). Très généralement, il peut s'agit d'éléments simples ou combinés (métaux, oxydes, carbures, nitrures, borures, etc...) seuls ou éventuellement combinés, de température de fusion élevée, typiquement supérieure à 1600°C, voire 2000°C environ, voire même 2500°C.

En fait, il avait déjà été proposé d'associer à la couche composite une seconde couche, mais celle-ci était, en règle générale, disposée entre la couche composite et la surface à protéger. L'invention enseigne par contre de munir la couche composite d'une couche externe, directement soumise à l'environnement extérieur agressif. Une telle démarche va plutôt à l'encontre des préjugés de l'homme de métier puisque les documents précités l'amenaient à considérer comme nécessaire de disposer, pour une bonne retenue de la partie extérieure de la protection thermique, d'un ancrage dans le sens de l'épaisseur de la couche composite, en pratique par l'intermédiaire de franges ou de rubans. Il a pourtant été constaté, de façon tout à fait surprenante, qu'une nette amélioration de la résistance à un environnement thermiquement et mécaniquement agressif pouvait être obtenue, sans l'aide de tels renforts transversaux, grâce à la simple addition à la couche composite d'une couche externe céramique, métallique ou semi-métallique. En effet, l'usage d'une telle couche externe était connue en soi, mais uniquement en combinaison avec une matrice oxyde (voir DE-C-3 638 658).

Selon des dispositions préférées de l'invention :
- le dispositif comporte une couche intermédiaire d'accrochage située entre la couche composite et la couche externe en matière céramique, métallique ou semi-métallique,
- l'armature réfractaire comporte une partie maillée et des franges solidaires de cette partie maillée,
- la partie maillée longe la face interne et les franges s'étendent au moins en partie en direction de la couche externe,
- les franges ont une inclinaison non nulle mais inférieure à 90° par rapport aux faces interne et externe, de préférence inférieur à 45°, par exemple entre 20 et 40°,
- ce dispositif de protection thermique a un axe de révolution,
- l'armature réfractaire est en silice, la matrice est en une résine phénolique,
- la couche externe peut être en matière céramique, par exemple formée d'un ou de plusieurs oxydes tels que l'alumine, la spinelle (MgO, Al₂O₃), la zircone éventuellement combinée avec de la silice (zircon), le bioxyde de titane, etc... seuls ou en mélange ; il peut s'agir en particulier d'alumine, seule ou en combinaison avec du bioxyde de titane (de préférence dans un rapport 60/40 en pourcentage en poids), voire de la spinelle, ou de la zircone,
- la couche externe peut aussi être une matière métallique, telle que du molybdène, du tungstène, du titane,
- la couche externe peut aussi être une matière semi-métallique (ou métalloïde) telle que des carbures, de titane et/ou de tungstène notamment,
- la couche externe a une température de fusion supérieure à 1600°C environ, de préférence supérieure à 2000°C environ,
- la couche externe est liée à la couche composite par une couche de cuivre.

L'invention propose de même un procédé de fabrication d'une protection thermique destinée à longer une surface à protéger vis-à-vis d'un environnement extérieur thermiquement agressif, comportant les étapes suivantes :
- on réalise une couche composite contenant une armature réfractaire noyée dans une matrice organique thermiquement isolante, cette couche composite ayant une face destinée à être en regard de la surface à protéger,
- on applique au moins indirectement sur cette couche composite une couche extérieure en matière céramique, métallique ou semi-métallique, définissant une face externe destinée à être soumise à l'environnement extérieur thermiquement agressif.

Selon d'autres dispositions préférées de l'invention :
- on réalise la couche composite par imprégnation d'un renfort avec une résine, par application de ce renfort imprégné sur une surface puis polymérisation de cette résine,
- on applique ce renfort imprégné par bobinage sur une surface de révolution,
- on applique ce renfort imprégné par bobinage sur la surface à protéger,
- le renfort est un maillage frangé,
- on fixe la couche extérieure à la couche composite en sorte que les franges soient dirigées vers cette couche extérieure,
- on réalise la couche composite en donnant aux franges une inclinaison non nulle mais inférieure à 90°, de préférence inférieur à 45°, par exemple entre 20 et 40°,
- on réalise la couche composite par imprégnation d'un renfort en silice par de la résine phénolique puis on polymérise cette résine,
- on réalise la couche externe en une matière céramique à base d'alumine,
- on réalise cette couche externe en un mélange d'alumine et de bioxyde de titane,
- on prépare ce mélange selon une proportion de 60 % d'alumine et de 40 % de bioxyde de titane,
- on réalise cette couche externe en molybdène,
- on applique une couche de cuivre sur la couche composite avant d'appliquer la couche externe,
- on applique la couche extérieure à l'aide d'une torche plasma.

Des objets, caractéristiques et avantages de l'invention ressortent de la description qui suit, donnée à titre d'exemple non limitatif, en regard des dessins annexés, sur lesquels :
- la figure 1 est une vue schématique en perspective d'une installation de préparation par bobinage de l'ébauche d'un dispositif de protection thermique conforme à l'invention,
- la figure 2 est une vue de côté d'un exemple de réalisation d'une armature destinée à être incorporée à cette ébauche,
- la figure 3 est une vue en coupe axiale de l'ébauche,
- la figure 4 est un organigramme montrant les principales étapes de préparation d'un dispositif de protection thermique conforme à l'invention, et
- la figure 5 est une vue en coupe axiale d'un dispositif de protection thermique conforme à l'invention.

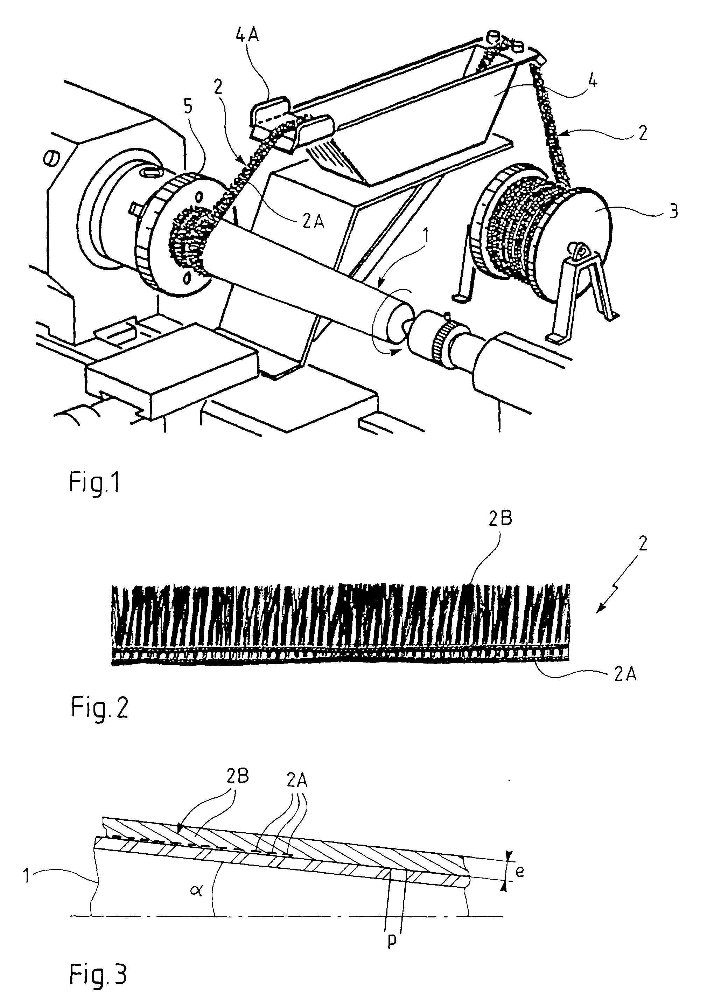

Les figures 1 à 3 correspondent à la première phase de réalisation d'un dispositif de protection thermique, consistant en la préparation d'une ébauche.

Cette première phase consiste à bobiner sur un corps 1 un renfort 2.

Le corps 1 est par exemple le corps destiné à être protégé par le dispositif de protection thermique. En variante, toutefois, il peut s'agir d'un mandrin intermédiaire.

Ce corps 1 est ici tronconique. Dans ce cas, le bobinage se fait avantageusement en direction de sa portion de plus faible diamètre.

Ce corps 1 est entraîné en rotation autour de son axe de révolution.

Le renfort 2 est un maillage ou textile frangé tel que tresse, galon ou ruban frangé.

Ce renfort 2, tel que représenté à la figure 2, comporte une partie maillée indéformable 2A comportant des mailles de petites dimensions et des franges ou fibres 2B.

En pratique, ce renfort 2 est initialement stocké sur un dévidoir 3.

Ce renfort 2 est en principe stocké dans un état non imprégné. C'est pourquoi, avant d'être bobiné sur le corps 1, ce renfort 2 passe dans un bac d'imprégnation 4 dans lequel il s'imprègne d'une résine appropriée, de préférence polymérisable.

Ce bac d'imprégnation 4 comporte avantageusement une gouttière de guidage 4A qui assure, lors de la rotation du corps 1 autour de son axe, un guidage du renfort 2 en sorte que celui-ci se bobine en spires de préférence jointives.

Un organe de contrôle d'inclinaison (non représenté) est prévu en sorte de donner aux franges du renfort une inclinaison voulue (inférieure à 45° par exemple, de préférence entre 20° et 40°).

Lorsque le bobinage a été effectué sur toute la surface utile du corps 1, ce corps 1 avec son bobinage sont amenés dans une autoclave où la résine d'imprégnation du renfort 2 est durcie, en pratique polymérisée.

L'ébauche représentée à la figure 3 représente ainsi un corps 1, de conicité α (demi-angle au sommet), revêtu d'une couche composite comportant des renforts munis de franges 2B, avantageusement inclinés en direction de la partie la plus étroite du corps 1, avec un pas de bobinage p, sur une épaisseur e.

Les étapes de procédé sont, dans leur généralité, connues en soi, par exemple d'après le document EP-0.174.886.

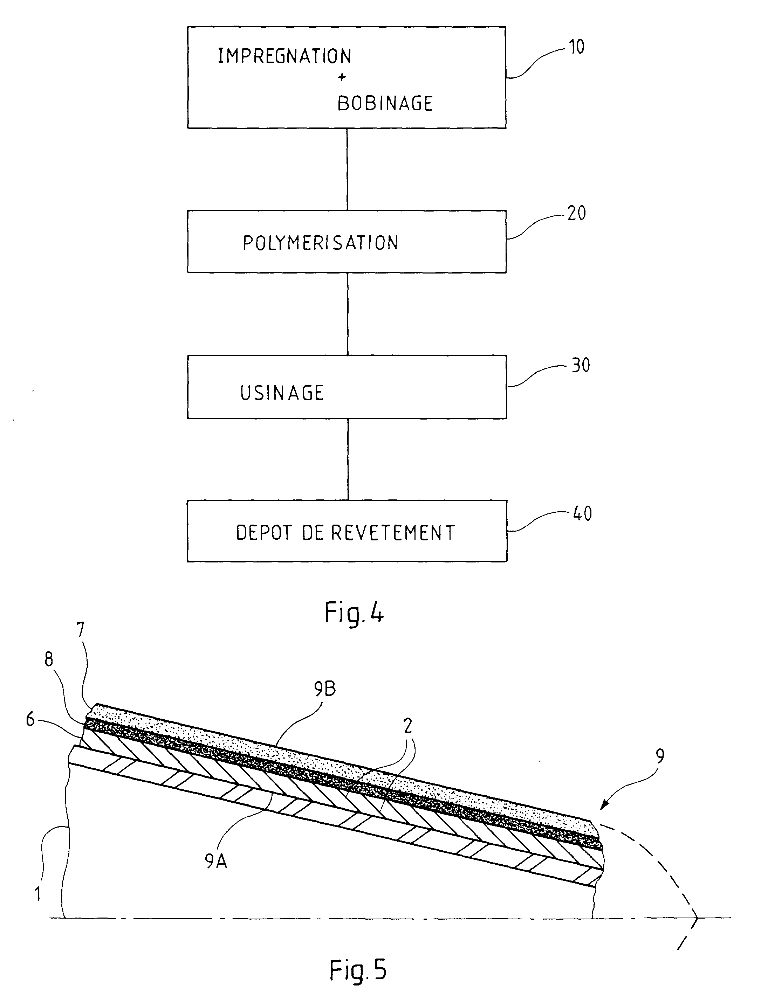

Ainsi que cela ressort de la figure 4, la fabrication d'un dispositif de protection thermique conforme à l'invention comporte, après une étape 10 d'imprégnation et de bobinage, puis une étape 20 de polymérisation, suite à quoi on obtient l'ébauche de la figure 3, une étape 30 d'usinage puis une étape 40 au cours de laquelle est effectué le dépôt d'un revêtement.

En effet, après polymérisation de la résine d'imprégnation, il apparaît généralement nécessaire de procéder à une mise à la cote finale du corps, par un usinage qui peut consommer jusqu'à environ la moitié de l'épaisseur de la couche composite polymérisée.

L'usinage peut bien sûr être réalisé à l'aide du même tour 5 que celui qui aura servi, à la figure 1, pour le bobinage.

Enfin, l'étape 40 consiste à déposer par tout procédé approprié, un revêtement externe de céramique 7 sur la couche composite 6 après usinage.

En tant que de besoin, pour optimiser la liaison entre la couche céramique 7 et la couche composite 6, une sous-couche d'accrochage 8 peut être intercalée entre celles-ci.

C'est la couche céramique 7 qui est destinée à être soumise à un écoulement extérieur thermiquement agressif. Cette couche céramique est avantageusement polie pour minimiser les effets de l'érosion mécanique et les agressions thermiques.

Ainsi que cela est représenté sur la figure 5, un dispositif de protection thermique 9 comporte une face interne 9A destinée à longer une surface à protéger et une face externe 9B destinée à être soumise à l'environnement extérieur. Ce dispositif de protection thermique comporte une couche composite 6 contenant une armature réfractaire noyée dans une matrice en matière thermiquement isolante, et une couche en matière céramique 7 dont fait partie ladite face externe 9B.

De manière préférée, le renfort 2 qui forme l'armature est constitué par un renfort frangé en silice, tandis que la résine polymérisable est une résine phénolique, avantageusement chargée.

A titre d'exemple, le renfort frangé en silice répond aux caractéristiques suivantes :
- hauteur de 25 mm,
- six mailles au centimètre,
- masse linéique de 2,88 g/m,
- les franges et la partie maillée sont réalisées en fil de silice de 80 Tex (c'est-à-dire 80 g/m),
- silice de référence C14.80Z20.QS13.

De tels renforts frangés en silice peuvent par exemple être obtenus auprès du CRST (Conseils et Recherches en Substrats Textiles) situé à 21350 Gissey-le-Vieil.

En ce qui concerne la matrice de la couche composite 6, elle est de préférence constituée d'une résine phénolique de référence NORSOPHEN 1703, avantageusement chargée en une poudre à base de zirconium, par exemple de l'oxyde de zirconium stabilisé. La charge de la résine peut être tout à fait importante puisque cette charge peut représenter de une à trois fois par exemple la masse de résine.

Lors de la réalisation de l'ébauche, le renfort frangé est par exemple bobinée sur le corps 1 avec un pas de 2 mm (cela correspondant, pour la frange, à une épaisseur d'environ du même ordre) pour assurer un bon bobinage ce renfort frangé est avantageusement mis sous tension, à une valeur par exemple de l'ordre de 2daN.

Comme indiqué à la figure 1, l'imprégnation du renfort frangé est réalisée tout d'abord par trempé dans le bac d'imprégnation 4 contenant une masse de résine préalablement préparée avec sa charge. De manière préférée, cette imprégnation est complétée par l'application, au point de contact du renfort frangé sur le corps 1 au cours même du bobinage, d'un cordon supplémentaire de résine. Cette application peut être réalisée à l'aide d'un pistolet extrudeur de tout type connu, par exemple de référence SEMCO, équipé d'une cartouche avec une buse à bout plat (référence 220572).

De manière préférée, les deux étapes d'imprégnation sont réalisées avec des résines présentant des niveaux différents de charge : la résine dans laquelle la frange est d'abord imprégnée par trempé est avantageusement moins chargée que la résine qui est appliquée au point de contact du renfort frangé sur le corps 1. C'est ainsi par exemple que la résine d'imprégnation par trempage peut contenir une charge d'oxyde de zirconium stabilisé en masse sensiblement égale à celle de la résine, tandis que la résine supplémentaire appliquée au point de contact frange/corps peut comporter une charge représentant trois fois la masse de cette résine.

Après le bobinage, il y a avantageusement mise en place :
- d'un tissu de pompage en verre, servant à absorber la résine excédentaire,
- d'une couche de frettage réalisée par bobinage d'un fil de carbone au pas de 10 mm avec une tension de 0,5 daN, ce qui a pour avantage de maintenir l'ensemble,
- et d'un tissu à délaminer, par exemple du type tissu de verre E Réf. 7628 de la Société HEXEL - 38630 Les Avenières.

La polymérisation de l'ébauche est par exemple obtenue à l'intérieur d'une autoclave dont la pression est de 10 bars. Lorsque, comme cela est représenté à la figure 1, le corps 1 est tronconique, celui-ci est avantageusement positionné dans l'autoclave, verticalement, la pointe vers le haut.

La polymérisation proprement dite est par exemple obtenue par maintien du corps ou du mandrin 1 avec la masse de franges imprégnées, pendant douze heures à 120°C, par exemple entre des régimes transitoires de montée ou de descente en température d'environ deux heures.

Le revêtement en céramique 7 est avantageusement réalisé par projection thermique, par exemple appliqué à la torche plasma fournie par la Société PLETECH située à F 94420 LE PLESSIS-TREVISE, France.

Ce revêtement céramique est avantageusement à base d'alumine, plus précisément à base d'alumine et de bioxyde de titane, de préférence selon une proportion d'environ 60/40 et pourcentage en poids.

Pour assurer une bonne liaison de cette couche externe à la matrice de la couche composite, l'opération de dépôt commence par l'application par projection thermique sur la couche composite d'une sous-couche d'accrochage en cuivre (sensiblement pur), le cuivre étant fortement compatible aussi bien avec la résine phénolique qu'avec l'alumine/bioxyde de titane.

A titre d'exemple, pour une protection thermique d'épaisseur de 25 mm, la couche composite, d'épaisseur initialement égale à environ 4 mm, a une épaisseur d'environ 2 mm après usinage, la sous-couche d'accrochage en cuivre a une épaisseur d'environ 0,1 mm, et la couche externe d'alumine/bioxyde de titane a une épaisseur d'environ 0,4 mm.

Le polissage de la surface extérieure de la couche céramique correspond de préférence à une valeur de Ra inférieure ou égale à 1,6.

On appréciera que la couche céramique, directement soumise, en service, à un écoulement érosif de durée limitée, résiste de manière tout à fait satisfaisante malgré l'absence d'ancrage dans l'épaisseur de la protection thermique.

A titre d'exemple, des tests comparatifs ont été réalisés en soufflerie, dans des conditions correspondant à une vitesse d'environ 1400 m/s à une altitude nulle, pendant 10 secondes, sur un échantillon conforme à l'invention réalisé comme indiqué ci-dessus et sur un échantillon témoin comportant seulement une couche composite identique, en l'absence de toute couche extérieure. Après essai, l'éprouvette d'échantillon témoin présentait une érosion de la couche composite de l'ordre de 1 mm alors qu'une éprouvette de l'échantillon conforme à l'invention ne présentait pas d'érosion détectable. Cela établissait clairement l'efficacité de la couche externe céramique.

C'est ainsi notamment que l'exemple qui a été décrit ci-dessus correspond à un renfort maillé dont les franges sont dirigées vers l'extérieur. L'invention couvre bien sûr le cas où la partie maillée serait située juste en-dessous de la couche céramique, tandis que les franges seraient dirigées vers la surface à protéger. En outre, les franges ne sont pas nécessairement toutes libres et de longueur constante : il peut s'agir de franges bouclées ou de tout autre type de frange, par exemple décrit dans le document EP-0.174.886. De même l'invention s'étend au cas où, par analogie avec le document EP-0.398.787, un tissu réfractaire à grande maille serait associé au renfort maillé, ou encore, par analogie avec le document FR-2.652.036, la couche composite comporterait une succession de tranches de renfort fibres réfractaires sensiblement parallèles et inclinées par rapport à la surface à protéger, entre lesquelles seraient intercalées des tranches isolantes. Enfin, il peut y avoir une superposition de plusieurs couches composites.

Il peut y avoir, entre la surface à protéger et la couche composite 6, fournisseur SODIEMA, 78140 Vélizy, une sous-couche primaire par exemple REDUX 71 de CIBA-GEIGY, ce qui a pour intérêt d'améliorer l'adhérence.

Il peut y avoir, entre la surface à protéger et la couche composite 6, une sous-couche de matière souple (mousse), ce qui a pour intérêt d'absorber les déformations dues aux sollicitations.

L'invention s'étend également au cas d'une résine rigidinière polymérisable du type polyimide, organique, phénolique ou polystyrilpyridine, i d'une résine semi-organique (silicone) ou d'une résine à caractère élastomère (silicone).

L'invention s'étend également au cas d'un renfort, non pas en silice, mais par exemple à base de fibres céramiques (carbure de silicium).

La couche céramique extérieure peut, en variante, être constituée des matériaux suivants : matériaux métalliques (notamment molybdène, tungstène, titane, etc...), céramiques (zircone, zircon, spinelle, etc...), ou semi-métallique (notamment carbures de titane et/ou de tungstène). Il s'agit typiquement d'éléments, éventuellement combinés (carbures, oxydes, nitrures ou borures) dont la température de fusion est élevée (typiquement supérieure à 1600°C, voire 2000°C).

On peut noter que ces matériaux ont notamment les propriétés mentionnées dans le Tableau 1.

**TABLEAU 1**

| Matériau | Formule Chimique | Point de fusion °C | Dilatabilité linéaire 10⁻⁶/°C | Conductivité thermique w/m.°C | Chaleur massique J/kg.°C |
|---|---|---|---|---|---|
| Alumine | Al₂O₃ | 2050 | 8,0 | 4 à 1315°C | 1050 |
| Zircone | ZrO₂ | 2700 | 7,5 | 3 à 1315°C | 590 |
| Zircon | ZrO₂+..SiO₂ | 2500 | 4,5 | 4 à 1200°C | 630 |
| Spinelle | MgO+Al₂O₃ | 2130 | 8,5 | 2 à 1315°C | 1050 |
| Carbure de titane | TiC | 3140 | 6,9 | 40 à 1100°C | 1050 |
| Carbure de tungstène | WC | 2780 | 6,3 | 43,3 à 1100°C | 300 |
| Nitrure de bore | BN | 2721 | 7,5 | 26 à 900°C | 1570 |
| Molybdène | Mo | 2615 | 5,75 à 1000°C | 105 à 1000°C | 310 à 1000°C |
| Tungstène | W | 3400 | 4,6 à 1000°C | 111 à 1000°C | 151 à 1000°C |
| Titane | Ti | 1667 | 9,9 à 800°C | 13 à 800°C | 682 à 800°C |

On notera que, à part le titane, la température de fusion est supérieure à 2000°C environ et la dilatabilité linéaire est inférieure à 6.10⁻⁶/°C. Les oxydes, carbures et nitrures et Ti ont une conductibilité thermique inférieure à 45 W/m.°C, voire inférieure à 15 W/m.°C, voire même inférieure à 5 W/m.°C.

Il va de soi que la description qui précède n'a été proposée qu'à titre d'exemple non limitatif et que de nombreuses variantes peuvent être proposées par l'homme de l'art sans sortir du cadre de l'invention.

## Revendications

1. Dispositif de protection thermique (9) destiné à longer une surface à protéger vis-à-vis d'un environnement extérieur thermiquement et mécaniquement sévère, ayant une face interne (9A) destinée à être en regard de la surface à protéger et une face externe (9B) destinée à être soumise à l'environnement extérieur, comportant une couche composite (6) contenant une armature réfractaire (2) noyée dans une matrice en matière organique thermiquement isolante, ce dispositif étant caractérisé en ce qu'il comporte en outre une couche externe (7) en matière céramique, métallique ou semi-métallique, dont fait partie ladite face externe et qui est solidaire de la couche composite.

2. Dispositif selon la revendication 1, caractérisé en ce qu'il comporte une couche intermédiaire d'accrochage (8) située entre la couche composite (6) et la couche externe (7) en matière céramique, métallique ou semi-métallique.

3. Dispositif selon la revendication 1 ou 2, caractérisé en ce que l'armature réfractaire comporte une partie maillée (2A) et des franges (2B) solidaires de cette partie maillée.

4. Dispositif selon la revendication 3, caractérisé en ce que la partie maillée (2A) longe la surface interne (9A) et les franges (2B) s'étendent au moins en partie en direction de la couche céramique.

5. Dispositif selon la revendication 3 ou 4, caractérisé en ce que les franges ont une inclinaison non nulle mais inférieure à 90° par rapport aux surfaces interne et externe, de préférence inférieur à 45°.

6. Dispositif selon l'une quelconque des revendications 1 à 5, caractérisé en ce que ce dispositif de protection thermique a un axe de révolution.

7. Dispositif selon l'une quelconque des revendications 1 à 6, caractérisé en ce que l'armature réfractaire est en silice, la matrice est à base de résine phénolique.

8. Dispositif selon l'une quelconque des revendications 1 à 7, caractérisé en ce que la couche externe est en matière céramique.

9. Dispositif selon la revendication 8, caractérisé en ce que la couche externe est à base d'alumine.

10. Dispositif selon la revendication 9, caractérisé en ce que la couche en matière céramique est un mélange d'alumine et de bioxyde de titane ou de zircone ou de spinelle, et cette couche est liée à la couche composite par une couche de cuivre.

11. Dispositif selon la revendication 10, caractérisé en ce que la couche en matière céramique est un mélange de 60 % d'alumine et de 40 % de bioxyde de titane.

12. Dispositif selon l'une quelconque des revendications 1 à 7, caractérisé en ce que la couche externe est en matière métallique, de préférence à base de molybdène ou de tungstène.

13. Procédé de fabrication d'une protection thermique selon la revendication 1 destinée à longer une surface à protéger vis-à-vis d'un environnement extérieur thermiquement et mécaniquement agressif, comportant les étapes suivantes :
- on réalise une couche composite (6) contenant une armature réfractaire (2) noyée dans une matrice organique thermiquement isolante, cette couche composite ayant une face destinée à être à proximité de la surface à protéger,
- on applique au moins indirectement sur cette couche composite une couche extérieure (7) en matière céramique, métallique ou semi-métallique, définissant une face externe (9B) destinée à être soumise à l'environnement extérieur thermiquement et mécaniquement agressif.

14. Procédé selon la revendication 13, caractérisé en ce qu'on réalise la couche composite par imprégnation d'un renfort (2) avec une résine, par application de ce renfort imprégné sur une surface puis polymérisation de cette résine.

15. Procédé selon la revendication 14, caractérisé en ce qu'on applique ce renfort imprégné par bobinage sur une surface de révolution.

16. Procédé selon la revendication 15, caractérisé en ce qu'on applique ce renfort imprégné par bobinage sur la surface à protéger.

17. Procédé selon l'une quelconque des revendications 13 à 16, caractérisé en ce que le renfort (2) est un maillage frangé.

18. Procédé selon la revendication 17, caractérisé en ce qu'on fixe la couche extérieure à la couche composite en sorte que les franges soient dirigées vers cette couche extérieure.

19. Procédé selon la revendication 17 ou 18, caractérisé en ce qu'on réalise la couche composite en donnant aux franges une inclinaison non nulle mais inférieure à 90°, de préférence inférieur à 45°.

20. Procédé selon l'une quelconque des revendications 13 à 19, caractérisé en ce qu'on réalise la couche composite par imprégnation d'un renfort en silice par de la résine phénolique puis on polymérise cette résine.

21. Procédé selon l'une quelconque des revendications 13 à 20, caractérisé en ce qu'on réalise la couche externe en une matière céramique à base d'alumine.

22. Procédé selon la revendication 21, caractérisé en ce qu'on réalise cette couche externe en un mélange d'alumine et de bioxyde de titane.

23. Procédé selon la revendication 22, caractérisé en ce qu'on prépare ce mélange selon une proportion de 60 % d'alumine et de 40 % de bioxyde de titane.

24. Procédé selon l'une quelconque des revendications 13 à 20, caractérisé en ce qu'on réalise cette couche externe en une matière métallique à base de molybdène ou de tungstène.

25. Procédé selon l'une quelconque des revendications 21 à 24, caractérisé en ce qu'on applique une couche de cuivre sur la couche composite avant d'appliquer la couche externe.

26. Procédé selon l'une quelconque des revendications 13 à 25, caractérisé en ce qu'on applique la couche extérieure par projection thermique.

27. Corps de révolution ayant une surface extérieure destinée à être soumise à un écoulement gazeux, au moins dans les conditions correspondant à une vitesse d'environ 1400 m/s à une altitude nulle pendant 10 secondes, et munie d'un dispositif de protection thermique selon l'une quelconque des revendications 1 à 12.

## Patentansprüche

1. Vorrichtung (9) zum thermischen Schutz, welche dazu bestimmt ist, sich längs einer gegenüber einer äußeren, thermisch und mechanisch strengen Umgebung zu schützenden Oberfläche zu erstrecken, mit einer inneren Seite (9A), die dazu bestimmt ist, gegen die zu schützende Oberfläche gerichtet zu sein, und einer äußeren Seite (9B), die dazu bestimmt ist, der äußeren Umgebung ausgesetzt zu sein, aufweisend eine Verbundschicht (6), die einen hitzebeständigen Mantel (2) aufweist, welcher in eine Matrix aus einem organischen, thermisch isolierenden Material eingelassen ist, wobei die Vorrichtung dadurch gekennzeichnet ist, daß sie eine äußere Schicht (7) aus einem Keramikmaterial, Metall- oder Halbmetallmaterial aufweist, zu der die äußere Seite gehört und die mit der Verbundschicht fest verbunden ist.

2. Vorrichtung nach Anspruch 1, dadurch gekennzeichnet, daß sie eine Verankerungszwischenschicht (8) aufweist, welche zwischen der Verbundschicht (6) und der äußeren Schicht (7) aus Keramikmaterial, Metall- oder Halbmetallmaterial gelegen ist.

3. Vorrichtung nach Anspruch 1 oder 2, dadurch gekennzeichnet, daß der hitzebeständige Mantel einen maschigen Teil (2A) und Fransen (2B) aufweist, die mit diesem maschigen Teil fest verbunden sind.

4. Vorrichtung nach Anspruch 3, dadurch gekennzeichnet, daß sich der maschige Teil (2A) längs der inneren Oberfläche (9A) erstreckt und sich die Fransen (2B) zumindest teilweise in Richtung der Keramikschicht erstrecken.

5. Vorrichtung nach Anspruch 3 oder 4, dadurch gekennzeichnet, daß die Fransen eine Neigung größer als 0, aber kleiner als 90°, vorzugsweise kleiner als 45°, in Bezug auf die innere und die äußere Oberfläche aufweisen.

6. Vorrichtung nach einem der Ansprüche 1 bis 5, dadurch gekennzeichnet, daß diese Vorrichtung zum thermischen Schutz eine Rotationsachse aufweist.

7. Vorrichtung nach einem der Ansprüche 1 bis 6, dadurch gekennzeichnet, daß der hitzebeständige Mantel aus Silicium ist, wobei die Matrix auf Phenolharz basiert.

8. Vorrichtung nach einem der Ansprüche 1 bis 7, dadurch gekennzeichnet, daß die äußere Schicht aus Keramikmaterial ist.

9. Vorrichtung nach Anspruch 8, dadurch gekennzeichnet, daß die äußere Schicht auf Aluminiumoxid basiert.

10. Vorrichtung nach Anspruch 9, dadurch gekennzeichnet, daß die Schicht aus Keramikmaterial eine Mischung aus Aluminiumoxid und Titan- oder Zirkoniumdioxid oder Spinell ist und daß diese Schicht durch eine Kupferschicht mit der Verbundschicht verbunden ist.

11. Vorrichtung nach Anspruch 10, dadurch gekennzeichnet, daß die Schicht aus Keramikmaterial eine Mischung aus 60 % Aluminiumoxid und 40 % Titandioxid ist.

12. Vorrichtung nach einem der Ansprüche 1 bis 7, dadurch gekennzeichnet, daß die äußere Schicht aus einem Metallmaterial ist, vorzugsweise auf der Basis von Molybdän oder Wolfram.

13. Verfahren zur Herstellung eines thermischen Schutzes nach Anspruch 1, der dazu bestimmt ist, sich längs einer gegenüber einer äußeren, thermisch und mechanisch aggressiven Umgebung zu schützenden Oberfläche zu erstrecken, welches die folgenden Schritte aufweist:
- Herstellen einer Verbundschicht (6), welche einen hitzebeständigen Mantel (2) aufweist, der in eine organische, thermisch isolierende Matrix eingebettet ist, wobei diese Verbundschicht eine Seite aufweist, die dazu bestimmt ist, benachbart der zu schützenden Oberfläche zu liegen,
- zumindest indirektes Aufbringen einer äußeren Schicht (7) aus Keramik-, Metall- oder Halbmetallmaterial, die eine äußere Seite (9B) definiert, welche dazu bestimmt ist, der thermisch und mechanisch aggressiven Umgebung ausgesetzt zu werden, auf diese Kompositschicht.

14. Verfahren nach Anspruch 13, dadurch gekennzeichnet, daß die Verbundschicht durch Imprägnierung einer Verstärkung (2) mit einem Harz durch Aufbringen dieser imprägnierten Verstärkung auf eine Oberfläche und anschließender Polymerisation dieses Harzes hergestellt wird.

15. Verfahren nach Anspruch 14, dadurch gekennzeichnet, daß diese imprägnierte Verstärkung durch Aufwickeln auf eine Rotationsoberfläche aufgebracht wird.

16. Verfahren nach Anspruch 15, dadurch gekennzeichnet, daß diese imprägnierte Verstärkung durch Aufwickeln auf die zu schützende Oberfläche aufgebracht wird.

17. Verfahren nach einem der Ansprüche 13 bis 16, dadurch gekennzeichnet, daß die Verstärkung (2) ein Netzwerk mit Fransen ist.

18. Verfahren nach Anspruch 17, dadurch gekennzeichnet, daß die äußere Schicht so auf der Verbundschicht befestigt wird, daß die Fransen gegen diese äußere Schicht gerichtet sind.

19. Verfahren nach Anspruch 17 oder 18, dadurch gekennzeichnet, daß die Verbundschicht dadurch hergestellt wird, daß den Fransen eine Neigung größer als 0, jedoch kleiner als 90°, vorzugsweise kleiner als 45°, verliehen wird.

20. Verfahren nach einem der Ansprüche 13 bis 19, dadurch gekennzeichnet, daß die Verbundschicht durch Imprägnierung einer Verstärkung aus Kieselsäureanhydrid durch ein Phenolharz und anschließender Polymerisierung dieses Harzes hergestellt wird.

21. Verfahren nach einem der Ansprüche 13 bis 20, dadurch gekennzeichnet, daß die äußere Schicht aus einem Keramikmaterial auf der Basis von Aluminiumoxid hergestellt wird.

22. Verfahren nach Anspruch 21, dadurch gekennzeichnet, daß diese äußere Schicht aus einer Mischung von Aluminiumoxid und Titandioxid hergestellt wird.

23. Verfahren nach Anspruch 22, dadurch gekennzeichnet, daß diese Mischung mit einem Verhältnis aus 60 % Aluminiumoxid und 40 % Titandioxid hergestellt wird.

24. Verfahren nach einem der Ansprüche 13 bis 20, dadurch gekennzeichnet, daß diese äußere Schicht aus einem Metallmaterial auf der Basis von Molybdän oder Wolfram hergestellt wird.

25. Verfahren nach einem der Ansprüche 21 bis 24, dadurch gekennzeichnet, daß vor dem Aufbringen der äußeren Schicht eine Kupferschicht auf die Verbundschicht aufgebracht wird.

26. Verfahren nach einem der Ansprüche 13 bis 25, dadurch gekennzeichnet, daß die äußere Schicht durch thermisches Spritzen aufgebracht wird.

27. Rotationskörper mit einer äußeren Oberfläche, die dazu bestimmt ist, zumindest unter den Bedingungen, die einer Geschwindigkeit von etwa 1400 m/s bei einer Höhe 0 während 10 Sekunden entsprechen, einer Gasströmung ausgesetzt zu werden, und der mit einer thermischen Schutzvorrichtung nach einem der Ansprüche 1 bis 12 ausgestattet ist.

## Claims

1. A thermal protection device (9) adapted to extend along a surface to be protected from a thermally and mechanically severe external environment, having an inside face (9A) adapted to face the surface to be protected and an outside face (9B) adapted to be exposed to the external environment, including a composite layer (6) containing a refractory armature (2) buried in a thermally insulative material matrix, the device being characterized in that it further includes a ceramic, metal or metalloid external layer (7) of which said outside face is part and which is attached to the composite layer.

2. A device according to claim 1 characterized in that it includes an intermediate bonding layer (8) between the composite layer (6) and the ceramic, metal or metalloid external layer (7).

3. A device according to claim 1 or claim 2 characterized in that the refractory armature includes a mesh part (2A) and fringes (2B) attached to the mesh part.

4. A device according to claim 3 characterized in that the mesh part (2A) extends along the inside surface (9A) and the fringes (2B) extend at least partly towards the ceramic layer.

5. A device according to claim 3 or claim 4 characterized in that the fringes have a non-zero inclination less than 90° to the inside and outside surfaces, preferably less than 45°.

6. A device according to any one of claims 1 to 5 characterized in that the thermal protection device has an axis of revolution.

7. A device according to any one of claims 1 to 6 characterized in that the refractory armature is of silica and the matrix is based on phenolic resin.

8. A device according to any one of claims 1 to 7 characterized in that the external layer is of ceramic.

9. A device according to claim 8 characterized in that the external layer is based on alumina.

10. A device according to claim 9 characterized in that the ceramic layer is a mixture of alumina and titanium dioxide or zirconia or spinel and is bonded to the composite layer by a layer of copper.

11. A device according to claim 10 characterized in that the ceramic layer is a mixture of 60% alumina and 40% titanium dioxide.

12. A device according to any one of claims 1 to 7 characterized in that the external layer is of metal, preferably based on molybdenum or tungsten.

13. A method of fabricating thermal protection according to claim 1 adapted to extend along a surface to be protected from a thermally and mechanically aggressive external environment, including the following steps:
- a composite layer (6) is made containing a refractory armature (2) buried in a thermally insulative matrix, the composite layer having a face adapted to be near the surface to be protected,
- a ceramic, metal or metalloid external layer (7) is applied at least indirectly to the composite layer, defining an external face (9B) adapted to be exposed to the thermally and mechanically aggressive external environment.

14. A method according to claim 13 characterized in that the composite layer is made by impregnating a reinforcement (2) with a resin, applying the impregnated reinforcement to a surface and polymerizing the resin.

15. A method according to claim 14 characterized in that the impregnated reinforcement is applied by winding it onto a surface of revolution.

16. A method according to claim 15 characterized in that the impregnated reinforcement is applied by winding it onto the surface to be protected.

17. A method according to any one of claims 13 to 16 characterized in that the reinforcement (2) is a fringed mesh.

18. A method according to claim 17 characterized in that the external layer is fixed to the composite layer so that the fringes are directed towards the external layer.

19. A method according to claim 17 or claim 18 characterized in that the composite layer is made by imparting to the fringes a non-zero inclination less than 90°, preferably less than 45°.

20. A method according to any one of claims 13 to 19 characterized in that the composite layer is made by impregnating a silica reinforcement with phenolic resin and then polymerizing the resin.

21. A method according to any one of claims 13 to 20 characterized in that the external layer is made from a ceramic based on alumina.

22. A method according to claim 21 characterized in that the external layer is made from a mixture of alumina and titanium dioxide.

23. A method according to claim 22 characterized in that the mixture is prepared in a proportion of 60% alumina and 40% titanium dioxide.

24. A method according to any one of claims 13 to 20 characterized in that the external layer is made from a metal based on molybdenum or tungsten.

25. A method according to any one of claims 21 to 24 characterized in that a layer of copper is applied to the composite layer before applying the external layer.

26. A method according to any one of claims 13 to 25 characterized in that the external layer is applied by thermal spraying.

27. A body of revolution having an external surface adapted to be exposed to a flow of gas at least under the conditions corresponding to a speed of approximately 1400 m/s at zero altitude for 10 seconds, and equipped with a thermal protection device according to any one of claims 1 to 12.
